# FASCICULE DE BREVET EUROPEEN

(11) **EP 0 743 730 B1**
(45) Date de publication et mention de la délivrance du brevet: **24.10.2001**
(21) Numéro de dépôt: 96410043.2
(22) Date de dépôt: 02.05.1996
(51) Int. Cl.: H02B 1/32, H02B 1/42

(54) **Coffret d'appareillage électrique**
Gehäuse eines elektrischen Gerätes
Cabinet for electrical apparatus

(30) Priorité: 17.05.1995 FR 9506073
(43) Date de publication de la demande: 20.11.1996
(73) Titulaire: Schneider Electric Industries SA, 92500 Rueil-Malmaison (FR)
(72) Inventeur: Canali, Pascal, 38050 Grenoble Cedex 09 (FR); Cartoux, Bernard, 38050 Grenoble Cedex 09 (FR)
(74) Mandataire: Jouvray, Marie-Andrée

(56) Documents cités:
- EP-A- 0 352 149
- DE-A- 2 952 619
- DE-U- 1 926 280
- DE-U- 1 993 996

## Description

L'invention concerne un coffret d'appareillage électrique comportant un fond destiné à être fixé à une paroi, un support en forme de rail pour recevoir de l'appareillage électrique modulaire, et un capot pour protéger ledit appareillage électrique.

Les coffrets d'appareillage connus comportent un fond et des parois sur lesquels sont fixés un ou plusieurs supports. Les supports sont généralement des rails symétriques maintenus au fond ou sur les parois par des vis de fixation. Des appareils électriques modulaires sont fixés par des dispositifs de fixation amovibles sur les rails. Ils sont positionnés perpendiculairement au fond des coffrets. Les faces avant des appareils électriques apparaissent sur les faces avant des coffrets disposées parallèlement au fond du boîtier.

Cette disposition permet une installation et un raccordement faciles des appareils électriques dans les coffrets. Certains appareils électriques comportant des organes de manoeuvre ou de visualisation sont aussi facilement utilisables si les faces avant sont visibles.

Lorsque les coffrets d'appareillage électrique doivent se trouver dans des endroits peu accessibles, la disposition classique des appareils n'est plus satisfaisante. Les avantages d'une installation aisée et d'un raccordement facile ne sont plus évidents. Il en est de même lorsque le volume occupé en saillie par les coffrets doit être réduit, et ne doit pas dépasser des dimensions prédéfinies. Des coffrets connus, notamment ceux prévus pour être encastrés permettent de réduire le volume occupé en saillie, mais leur mise en oeuvre n'est pas facile et rapide.

Un autre coffret connu décrit dans le document DE-U-1993996 comporte un rail fixé sur un pivot disposé sur une partie latérale dudit coffret servant de support. Dans ce coffret, le pivot permet une rotation selon un axe perpendiculaire à ladite partie latérale. Un tel coffret permet d'améliorer l'accessibilité à des appareils électriques mais ne permet pas de réduire notablement le volume en saillie dudit coffret.

L'invention a pour but un coffret d'appareillage électrique permettant d'occuper un volume en saillie réduit et permettant une fixation et des raccordements aisés des appareils électriques.

Selon l'invention, ce but est atteint par le fait que le coffret comporte un dispositif de fixation pivotant selon un axe parallèle au fond du coffret pour fixer le support sur le fond et permettre une disposition de l'appareillage telle que ledit appareillage soit sensiblement parallèle au fond avec une face latérale sensiblement parallèle à la paroi sur laquelle ledit fond est destiné à être fixé, le support pouvant pivoter entre une position normale d'utilisation dans laquelle ledit support est disposé sensiblement perpendiculairement au plan du fond et une autre position où ledit support est déployé.

Selon un mode préférentiel de réalisation, la longueur du support est inférieure à la dimension de l'appareillage électrique correspondant à la distance entre une face arrière destinée à être fixée sur le support et une face avant.

Dans un mode particulier de réalisation, le capot comporte une ouverture latérale sur une face perpendiculaire au fond , ladite ouverture permettant l'accessibilité à la face avant de l'appareillage.

De préférence, le support est un rail symétrique.

Selon un développement de l'invention, le dispositif de fixation pivotant comporte au moins un clips disposé sur le fond du coffret, un axe associé au support et destiné à être maintenu par ledit clips, et des butées disposées perpendiculairement audit axe pour bloquer les déplacements longitudinaux du support.

Selon un mode de réalisation du développement de l'invention le fond est en matière plastique isolante, les clips étant moulés avec ledit fond. Le support, l'axe, et les butées forment, de préference, une seule pièce moulée en matière plastique.

D'autres avantages ressortiront plus clairement de la description qui va suivre, de modes particuliers de réalisation de l'invention, donnés à titre d'exemples non limitatifs, et représentés aux dessins annexés sur lesquels :

Les figures 1 et 2 montrent deux vues d'un fond et d'un support selon un mode de réalisation de l'invention.

La figure 3 montre une vue d'un fond selon le mode de réalisation de la figure 1 et d'un support de dimensions différentes.

La figure 4 montre l'installation et le raccordement d'un appareil dans un coffret selon la figure 3.

La figure 5 montre un coffret selon la figure 3 avec l'appareil électrique installé dans sa position normale d'utilisation.

La figure 6 montre un coffret selon les figures 1 et 2 comportant un appareil électrique installé et un capot de protection.

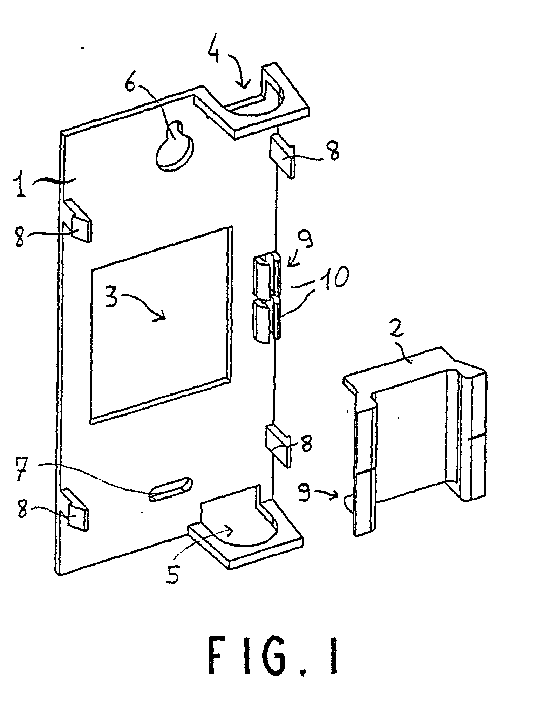

Le coffret selon un mode de réalisation de l'invention de la figure 1 comporte un fond 1 destiné à être fixé sur une paroi et un support 2 en forme de rail symétrique. le fond 1 comporte une ouverture 3 et des passages 4 et 5 pour recevoir des arrivées ou des départs de conduits électriques. la fixation du fond sur une paroi, par exemple un mur ou une cloison, se fait à travers deux orifices 6 et 7. Des ergots 8 disposés à des extrémités de la plaque formant le fond 1 participent à la fixation d'un capot du coffret.

Le support 2 en forme de rail symétrique a une longueur lui permettant de recevoir deux appareils modulaires ou un appareil ayant la largeur de 2 modules. La largeur d'un module est généralement de l'ordre de 18mm ou 9mm. Le support 2 est fixé sur le fond 1 à l'aide d'un dispositif pivotant 9.

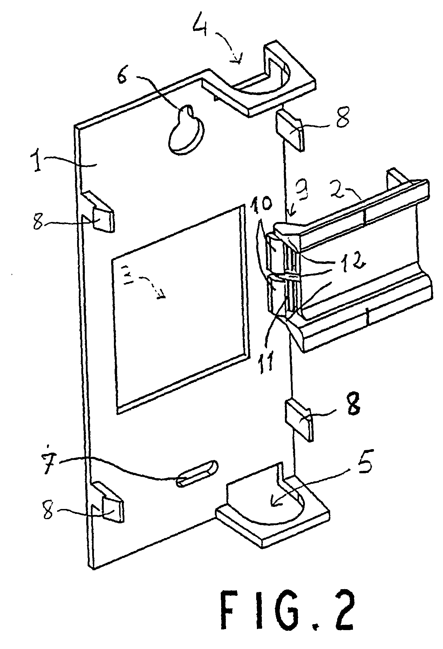

Le dispositif 9 comporte une partie fixe, composée par exemple de clips 10 disposés de préférence en bordure de la plaque de fond, et d'une partie mobile. La partie mobile est constituée par un axe 11 qui s'enclipse dans la partie fixe comme représenté sur la figure 2. Tout mouvement longitudinal est bloqué par des butées 12 disposées perpendiculairement à l'axe 11. Deux butées sont situées aux extrémités de l'axe 11 et une sur sa partie centrale.

Le support 2 pivote par rapport au fond 1 autour de l'axe 11 de rotation, parallèlement audit fond 1 et à la paroi de fixation.

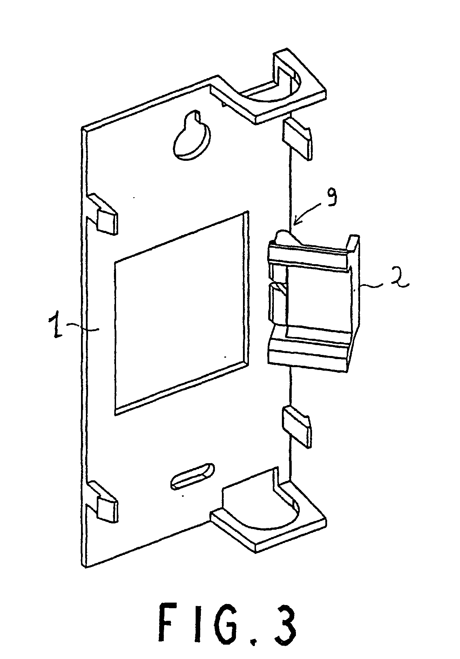

Le mode particulier de réalisation de la partie fixe 10, sous la forme de clips permet d'interchanger des supports 2 et de les adapter rapidement au type d'appareil électrique à installer. la figure 3 montre un fond selon le mode de réalisation des figures 1 et 2, et un support 2 ayant les dimensions d'un seul module.

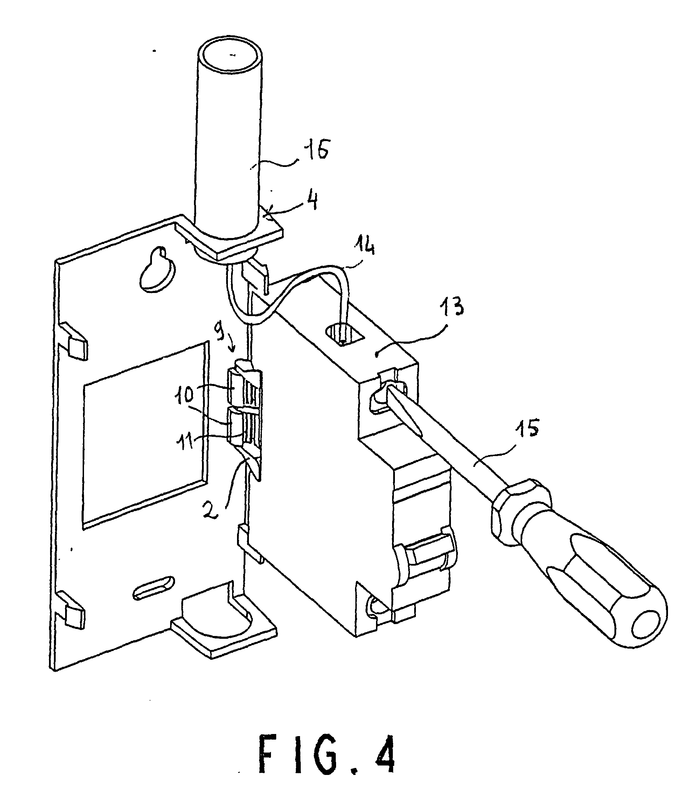

La figure 4 montre l'installation et le raccordement d'un appareil électrique dans un coffret ayant un fond 1 et un support 2 selon la figure 3. Un appareil électrique 13, pouvant être par exemple, un disjoncteur ou un interrupteur, est fixé sur le support 2.

La fixation se fait, de préférence lorsque le support est déployé de manière à ce que l'appareil 13 se trouve perpendiculairement au fond. Dans cette position, le raccordement d'un conducteur électrique 14 est facilité. Un outil de forme allongé comme un tournevis 15 peut être utilisé sans difficulté. Le conducteur 14 arrive, dans cet exemple, par un conduit 16 traversant le passage 4.

Lorsque le raccordement est terminé, l'appareil 13 peut-être disposé dans sa position normale d'utilisation. l'appareil électrique est alors rabattu vers le fond du coffret grâce au pivotement du support 2 par rapport au fond 1.

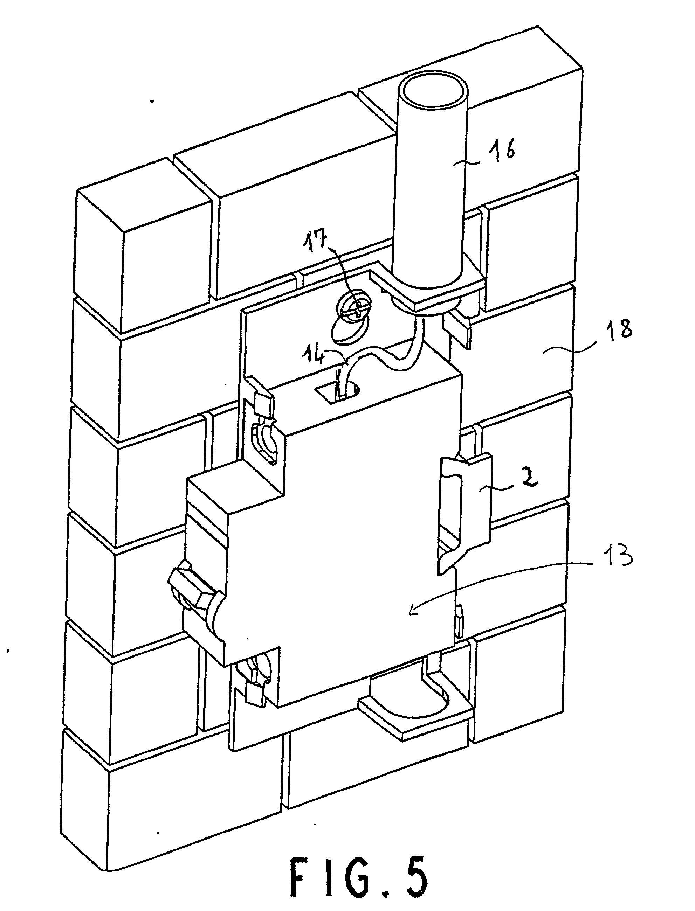

La figure 5 montre le coffret et l'appareillage de la figure 4 dans sa position normale d'utilisation. Le fond 1 est fixé par une vis 17 contre une paroi 18 d'un mur.

Le support 2 qui a pivoté verticalement selon un axe parallèle au fond 1 se trouve dans une position sensiblement perpendiculaire audit fond et à la paroi. L'appareillage est dans une position où il est plaqué parallèlement au fond, avec une face latérale parallèle à la paroi 18. Le volume en saillie occupé par le coffret est très faible. Il dépend de la largeur de l'appareillage ou de la longueur du support. Dans des coffrets connus le volume occupé en saillie dépendait de la hauteur de l'appareillage, la hauteur étant la distance entre la face arrière de l'appareillage qui se fixe sur le support et la face avant accessible.

Dans sa position normale la face avant de l'appareil électrique reste accessible, ce qui permet à un utilisateur de le manoeuvrer ou de le visualiser.

La protection de l'appareil électrique est assurée par un capot 19 qui coiffez l'ensemble du coffret. le capot est fixé et maintenu par les ergots 8.

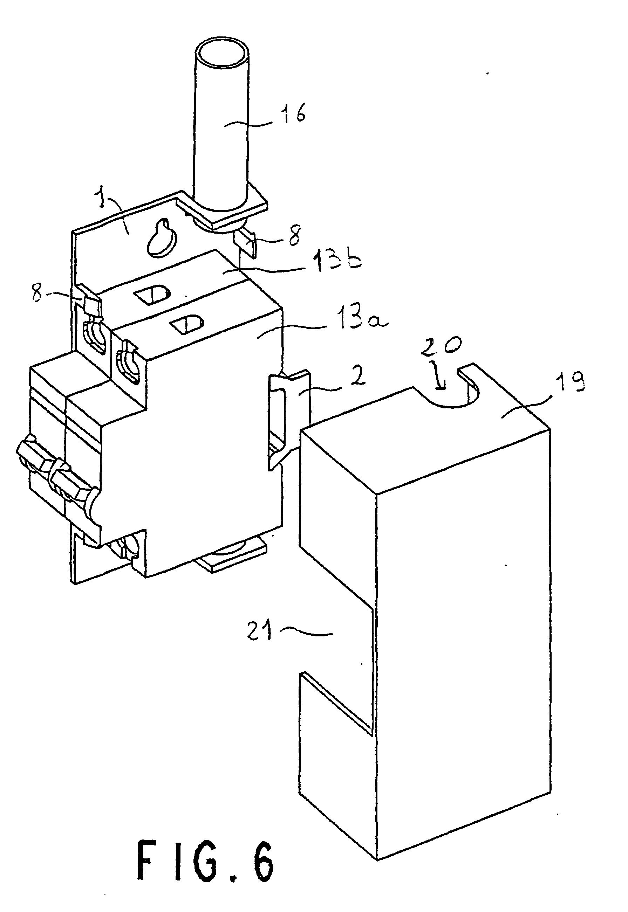

La figure 6 montre une vue éclatée d'un coffret, selon un mode de réalisation de l'invention, comportant un support 2 supportant deux appareils électriques 13a et 13b. le capot 19, permettant de coiffer les deux appareils et le fond du coffret, comporte une encoche 20 pour le passage du conduit 16 et une ouverture 21 pour rendre accessible les faces avant des appareils.

Dans les modes de réalisation décrits ci-dessus, le support 2 a une longueur permettant de supporter un ou deux appareils électriques modulaires. Mais, il est possible d'utiliser dans des coffrets selon l'invention des supports de longueur supérieure.

Le dispositif de fixation pivotant décrit ci-dessus comporte, de préférence, une partie fixe en forme de clips et une partie mobile en forme d'axe. Dans d'autres modes de réalisation de l'invention il est possible d'inverser les parties fixes et mobiles. Il est possible aussi d'utiliser d'autres systèmes permettant le pivotement entre le support et le fond.

Le support 2 est de préférence un rail en matière plastique, mais il peut-être en tout autre matériau, par exemple en métal. La forme d'un rail symétrique peut également être remplacée par tout autre forme de support, par exemple des rails asymétriques.

## Revendications

1. Coffret d'appareillage électrique comportant un fond (1) destiné à être fixé à une paroi (18), un support (2) en forme de rail pour recevoir de l'appareillage électrique (13, 13a, 13b) modulaire, et un capot (19) pour protéger ledit appareillage électrique,
coffret **caractérisé en ce qu'**il comporte un dispositif de fixation pivotant selon un axe parallèle au fond du coffret pour fixer le support (2) sur le fond (1) et permettre une disposition de l'appareillage telle que ledit appareillage soit sensiblement parallèle au fond avec une face latérale sensiblement parallèle à la paroi (18) sur laquelle ledit fond est destiné à être fixé, le support (2) pouvant pivoter entre une position normale d'utilisation dans laquelle ledit support est disposé sensiblement perpendiculairement au plan du fond (1) et une autre position où ledit support est déployé.

2. Coffret d'appareillage électrique selon la revendication 1 **caractérisé en ce que** la longueur du support (2) est inférieure à la dimension de l'appareillage (13,13a, 13b) électrique correspondant à la distance entre une face arrière destinée à être fixée sur le support (2) et une face avant.

3. Coffret d'appareillage électrique selon l'une des revendications 1 et 2 **caractérisé en ce que** le capot (19) comporte une ouverture latérale sur une face perpendiculaire au fond (1), ladite ouverture permettant l'accessibilité à la face avant de l'appareillage.

4. Coffret d'appareillage électrique selon l'une quelconque des revendications 1 à 3 **caractérisé en ce que** le support (2) est un rail symétrique.

5. Coffret d'appareillage électrique selon l'une quelconque des revendications 1 à 4 **caractérisé en ce que** le dispositif de fixation pivotant comporte au moins un clips (10) disposé sur le fond (1) du coffret, un axe (11) associé au support et destiné à être maintenu par ledit clips (10) et des butées (12) disposées perpendiculairement audit axe (11) pour bloquer les déplacements longitudinaux du support.

6. Coffret d'appareillage électrique selon la revendication 5 **caractérisé en ce que** le fond (1) est en matière plastique isolante, les clips (10) étant moulés avec ledit fond (1).

7. Coffret d'appareillage électrique selon la revendication 5 **caractérisé en ce que** le support (2), l'axe (11), et les butées (12) forment une seule pièce moulée en matière plastique.

## Patentansprüche

1. Gehäuse für elektrische Schaltgeräte mit einem Boden (1) zur Befestigung an einer Wand (18), einem Träger (2) in Form einer Schiene zur Aufnahme von modularen elektrischen Schaltgeräten (13, 13a, 13b) sowie einer Abdeckung (19) zum Schutz der genannten elektrischen Schaltgeräte,
**dadurch gekennzeichnet, daß** es eine Befestigungsvorrichtung umfaßt, die um eine parallel zum Boden des Gehäuses verlaufende Achse verschwenkt wird und die Befestigung des Trägers (2) am Boden (1) sowie eine Positionierung der Schaltgeräte ermöglicht, in der die genannten Schaltgeräte annähernd parallel zum Boden liegen und ihre Seitenfläche annähernd parallel zur Wand (18) verläuft, an der der genannte Boden befestigt werden soll, wobei der Träger (2) zwischen einer normalen Betriebsstellung, in der der genannte Träger annähernd senkrecht zur Ebene des Bodens (1) steht, und einer zweiten Stellung verschwenkt werden kann, in welcher der genannte Träger ausgeschwenkt ist.

2. Gehäuse für elektrische Schaltgeräte nach Anspruch 1, **dadurch gekennzeichnet, daß** die Länge des Trägers (2) kleiner ist als das Maß der elektrischen Schaltgeräte (13, 13a, 13b), das dem Abstand zwischen einer zur Befestigung auf dem Träger (2) dienenden Rückseite und einer Vorderseite entspricht.

3. Gehäuse für elektrische Schaltgeräte nach einem der Ansprüche 1 und 2, **dadurch gekennzeichnet, daß** die Abdeckung (19) eine, in einer senkrecht zum Boden (1) angeordneten Wand ausgebildete seitliche Öffnung umfaßt, welche Öffnung den Zugang zur Vorderseite des Schaltgeräts ermöglicht.

4. Gehäuse für elektrische Schaltgeräte nach irgendeinem der Ansprüche 1 bis 3,
**dadurch gekennzeichnet, daß** der Träger (2) als symmetrische Schiene ausgebildet ist.

5. Gehäuse für elektrische Schaltgeräte nach irgendeinem der Ansprüche 1 bis 4,
**dadurch gekennzeichnet, daß** die schwenkbare Befestigungsvorrichtung mindestens ein am Boden (1) des Gehäuses angeordnetes Schnappelement (10), eine dem Träger zugeordnete Achse (11), die dazu dient, vom genannten Schnappelement (10) gehalten zu werden, sowie senkrecht zur genannten Achse (11) angeordnete Anschläge (12) umfaßt, die dazu dienen, Längsbewegungen des Trägers zu blockieren.

6. Gehäuse für elektrische Schaltgeräte nach Anspruch 5, **dadurch gekennzeichnet, daß** der Boden (1) aus Isolierstoff besteht und die Schnappelemente (10) an den genannten Boden angeformt (1) sind.

7. Gehäuse für elektrische Schaltgeräte nach Anspruch 5, **dadurch gekennzeichnet, daß** der Träger (2), die Achse (11) und die Anschläge (12) als einstückiges Kunststoff-Formteil ausgebildet sind.

## Claims

1. An electrical equipment cabinet comprising a back plate (1) designed to be fixed to a wall (18), a support (2) in the form of a rail to receive modular electrical equipment (13, 13a, 13b), and a cover (19) for protecting said electrical equipment,
**characterized in that** it comprises a fixing device pivoting according to an axis parallel to the back plate of the cabinet to fix the support (2) onto the back plate (1) and to allow the electrical equipment to be arranged in such a way that said electrical equipment is appreciably parallel to the back plate with a side face appreciably parallel to the wall (18) on which said back plate is designed to be fixed, the support (2) being able to pivot between a normal position of use in which said support is arranged appreciably perpendicularly to the plane of the back plate (1) and another position wherein said support is in the extended position.

2. The electrical equipment cabinet according to claim 1, **characterized in that** the length of the support (2) is smaller than the dimension of the electrical equipment (13, 13a, 13b) corresponding to the distance between a rear panel designed to be fixed onto the support (2), and a front panel.

3. The electrical equipment cabinet according to one of the claims 1 and 2, **characterized in that** the cover (19) comprises a lateral opening on a face perpendicular to the back plate (1), said opening enabling access to the front panel of the equipment.

4. The electrical equipment cabinet according to any one of the claims 1 to 3, **characterized in that** the support (2) is a symmetrical rail.

5. The electrical equipment cabinet according to any one of the claims 1 to 4, **characterized in that** the pivoting fixing device comprises at least one clip (10) arranged on the back plate (1) of the cabinet, a spindle (11) associated to the support and designed to be secured by said clip (10), and stops (12) arranged perpendicularly to said spindle (11) to prevent longitudinal movements of the support.

6. The electrical equipment cabinet according to claim 5, **characterized in that** the back plate (1) is made of insulating plastic material, the clips (10) being cast with said back plate (1).

7. The electrical equipment cabinet according to claim 5, **characterized in that** the support (2), spindle (11), and stops (12) form a single moulded part made of plastic material.
